Europäisches Patentamt

European Patent Office

Office européen des brevets

(11) Publication number: **0 431 183 A1**

## EUROPEAN PATENT APPLICATION
### published in accordance with Art. 158(3) EPC

(21) Application number: 90908681.1

(22) Date of filing: 04.06.90

(86) International application number:
PCT/JP90/00720

(87) International publication number:
WO 90/15371 (13.12.90 90/28)

(51) Int. Cl.⁵: G05B 19/18

(30) Priority: 07.06.89 JP 143107/89

(43) Date of publication of application:
12.06.91 Bulletin 91/24

(84) Designated Contracting States:
DE FR GB

(71) Applicant: FANUC LTD.
3580, Shibokusa Aza-Komamba Oshino-mura
Minamitsuru-gun, Yamanashi 401-05(JP)

(72) Inventor: SAKAMOTO, Keiji Room 102
Fuyohaitsu
65-4, Takakura-cho
Hachioji-shi Tokyo 192(JP)
Inventor: TANIGUCHI, Mitsuyuki Room 8-205
Fanuc
Manshonharimomi 3511-1, Shibokusa
Oshino-mura,
Minamitsuru-gun Yamanashi 401-05(JP)
Inventor: MATSUBARA, Shunsuke Room
8-203, Fanuc
Manshonharimomi 3511-1, Shibokusa
Oshino-mura,
Minamitsuru-gun Yamanashi 401-05(JP)
Inventor: IWASHITA, Yasusuke Fanuc Dai-3
Viva-karamatsu
3527-1, Shibokusa Oshino-mura
Minamitsuru-gun
Yamanashi 401-05(JP)

(74) Representative: Billington, Lawrence Emlyn et
al
HASELTINE LAKE & CO Hazlitt House 28
Southampton Buildings Chancery Lane
London WC2A 1AT(GB)

(54) ABSOLUTE POSITIONING METHOD.

(57) An absolute positioning method which can set easily and automatically an absolute position of a driven member at the time of power-on of a full closed-loop servo system. When the power source of a numerical controller (10) is turned on, a processor (11) lets a servo motor (21) make a predetermined number of revolutions to eliminate any backlash of a ball screw-nut mechanism (23) (S1). Next, a pitch error correction value ($\epsilon$) in accordance with the rotating position of the motor is added to an actual motor rotating position (P) at the time of the completion of the motor rotation which is detected by an absolute system encoder (22) fitted to the servo motor so as to eliminate the pitch error. Furthermore, the sum (P + $\epsilon$) is stored as the absolute position of a table (20), as a driven member, at the time of turning-on of the power source in a nonvolatile memory (14) (S2 ~ S4). Thereafter, the absolute position is updated in accordance with the table moving distance detected by an incremental linear scale (24) fitted to the table during the driving control of the table.

# FIG.1

## ABSOLUTE TYPE POSITIONING METHOD

Technical Field

The present invention relates to an absolute type positioning method, and more particularly, to an absolute type positioning method capable of easily and automatically setting an absolute position of a driven member assumed at the time of turning on the electric power for a servo system of a full-closed type.

Background Art

A servo system of a semi-closed type is conventionally known, which is arranged to perform position control of a driven member, driven by a servomotor, in accordance with a feedback signal supplied from a position detector attached to the servomotor. In a servo system of this kind, the moved position of the driven member is not detected directly, and the rotational position of the servomotor is detected in stead of the driven member position. In this connection, there occurs an error in the detection of the driven member position due to the presence of a pitch error and a backlash error in a transmission mechanism which is interposed between the driven member and the servomotor and consisting of, e.g., a ball nut and a ball screw.

Conventionally, to obviate this, the detected motor rotational position is subject to pitch error correction and backlash error correction, so as to detect the motor rotational position accurately indicating the table position. Alternatively, to eliminate the need of error correction of this kind, is employed a full-closed type servo system where position control is performed in accordance with a feedback signal supplied from a position detector which is attached to the driven member. In this case, an incremental linear scale is generally employed as the position detector for the full-closed type servo system. Hence, to perform control based on the absolute position of the driven member, it is necessary to execute zero return processing, which is complicated and time consuming, each time the power to a control system is turned on.

Disclosure of the Invention

The object of the present invention is to provide an absolute type positioning method which is capable of easily and automatically setting the absolute position of a driven member assumed at the time power to a full-closed type servo system is turned on.

In order to achieve the above-mentioned object, an absolute type positioning method of the present invention comprises steps of: (a) rotating a servomotor through a predetermined rotational amount which is larger than a servomotor rotational amount corresponding to backlash in a transmission mechanism interposed between the the servomotor and a driven member, when power to a full-closed type servo system is turned on; (b) detecting an actual servomotor rotational position assumed at the time said step (a) is completed, by means of an absolute type position detector attached to the servomotor; (c) adding a value for pitch error correction to the detected servomotor rotational position, said value varying as a function of the detected servomotor rotational position; and (d) automatically setting a result of addition as an absolute position of the driven member assumed at the time the power is turned on.

Preferably, the absolute type positioning method of the present invention further includes steps of: (e) detecting an actual moved amount of the driven member by means of an incremental position detector attached to the driven member; and (f) renewing the absolute position of the driven member in accordance with the detected moved amount of the driven member.

As described above, according to the present invention, when the power to the full-closed type servo system is turned on, the servomotor is rotated through the predetermined rotational amount which is larger than the servomotor rotational amount corresponding to the backlash in the transmission mechanism, and that motor rotational position, which is obtained by correcting the servomotor rotational position detected at completion of the motor rotation, with the pitch error correction value varying as a function of the thus detected rotational position, is automatically set as the absolute position of the driven member assumed at the time the power is turned on. Thus, the backlash error and the pitch error can be eliminated, and it is unnecessary to perform the complicated and time-consuming zero return processing when the power is turned on. Preferably, the absolute position of the driven member is renewed in accordance with the move amount of the driven member. This makes it possible to always detect the absolute position of the driven member, whereby the driven member can be positioned in accordance with the detected absolute position.

Brief Description of the Drawings

Fig. 1 is a schematic diagram showing a full-closed type servo system to which is applied an absolute type positioning method of an embodiment of the present invention;

Fig. 2 is a flowchart showing an absolute position setting process executed by a processor of a numerical control unit shown in Fig. 1; and

Fig. 3 is a diagram showing pitch error correction executed by the processor.

Best Mode of Carrying Out the Invention

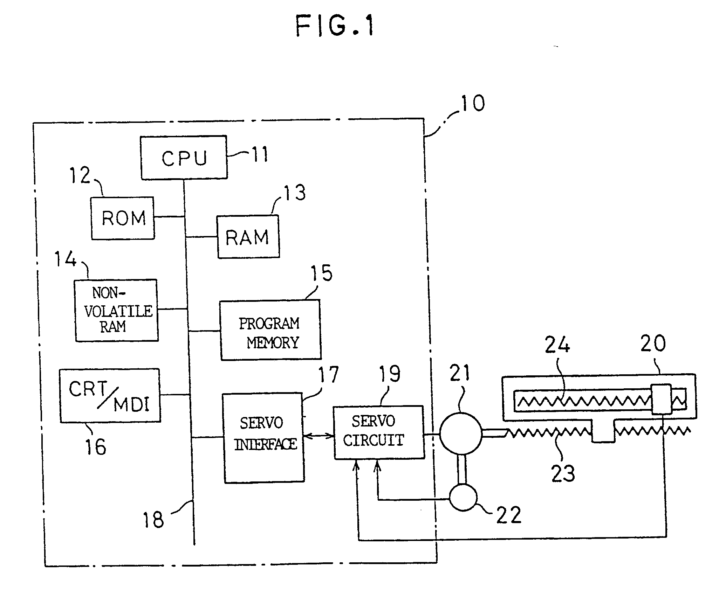

Referring to Fig. 1, a full-closed type servo system to which an absolute position detecting method according to an embodiment of the present invention is applied comprises a control unit, e.g., a numerical control unit (NC unit) 10 accommodating therein a computer. The NC unit 10 includes a processor (CPU) 11 for executing various programs, a read-only memory (ROM) 12 storing therein a manage control program executed by the CPU 11, and a random-access memory (RAM) 12 for temporal storage of the results of calculation executed by the CPU 11 and various data. The RAM 13 includes a current value register (not shown) for storing a value indicative of the current moved position of a driven member, e.g., a table of an NC machine tool.

Further, the NC unit 10 includes a non-volatile memory 14, a program memory 15 for storing an operation program supplied through an input device such as a tape reader or a disk controller, and a manual data input device (CRT/MDI) 16 with a CRT display unit, a servo interface 17, and a servo circuit 19. The above-mentioned elements 12 - 17 are connected to the CPU 11 through busses 18.

In addition to the NC unit 10, the servo system comprises a servomotor 21 connected to the servo circuit 19 of the NC unit 10, a first position detector consisting of an absolute type encoder 22 coupled to the rotary shaft of the servomotor 21 for generating a coded feedback signal indicative of the motor rotational position each time the motor rotary shaft rotates through a predetermined angle, and a second position detector consisting of an incremental linear scale 24 attached to the table (driven member) 20 for generating a feedback pulse signal each time the table 20 moves through a predetermined distance. The table 20 includes a ball nut threadedly engaged with a ball screw 23 which is operatively coupled to the rotary shaft of the servomotor 21 and which cooperates with the ball screw to form a transmission mechanism. The encoder 22 and the linear scale 24 are connected to the servo circuit 19.

The servo circuit 19 is arranged to effect position loop control based on a position command delivered from the CPU 11, which reads out a move command from the operation program, and indicative of a target moved position of the table 20, and effect speed loop control based on a speed command corresponding to a position deviation and a signal converted from the feedback signal supplied from the encoder 22 and indicative of an actual moving speed of the table.

The non-volatile memory 14 is provided with storage regions for respectively storing first and second predetermined servomotor rotational amounts and a pitch error correction unit, which are associated with the later-mentioned absolute position setting process. The first and second rotational amounts and the correction unit are manually set through the CRT/MDI 16, for instance, and are stored into the respective storage regions of the non-volatile memory 14 under the control of the CPU 11. The first predetermined servomotor rotational amount is set to a value which is larger than the servomotor rotational amount corresponding to backlash in the ball screw 23 and the ball nut. The pitch error correction unit and the second predetermined servomotor rotational amount are respectively set to values suitable to compensation of an error between an actually measured pitch of the ball screw 23 and a design pitch thereof. For instance, the pitch error correction unit and the second predetermined rotational amount are set to a value of "1" corresponding to the resolution of the encoder 22 and to a value of "1000" which is 1000 times as large as the encoder's resolution, respectively.

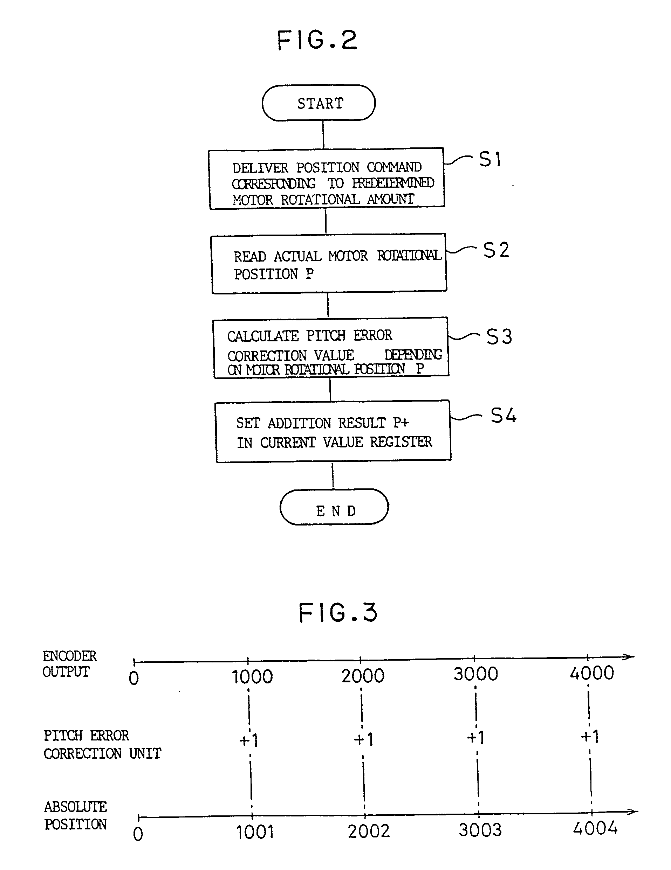

With reference to Figs. 2 and 3, an absolute position setting process executed by the servo system shown in Fig. 1 will be explained.

When the power to the NC unit 10 is turned on, the CPU 11 executes the absolute position setting process shown in Fig. 2. Namely, when the power is turned on, the CPU 11 reads out, from, e.g., the non-volatile RAM 14, the first predetermined servomotor rotational amount stored therein, and position data stored therein and indicative of an actual servomotor rotational position assumed at the time the preceding operation is stopped, i.e., at the time the power is currently turned on. Further, the CPU adds the read amount and the read position together to thereby generate a position command indicative of a target servomotor rotational position at the time the power is turned on, and delivers the position command to the servo circuit 19 through the servo interface 17 (step S1). In response to the position command, the servo circuit 19 causes the servomotor 21 to rotate through the first predetermined servomotor rotational amount, which is larger than that servomotor rotational amount corresponding to the backlash in the ball screw 23, in a predetermined rotational direction, e.g., in the forward direction along which the motor rotational position increases. As a consequence, the backlash error is eliminated.

When determining the completion of the servomotor 21 rotation (an illustration of the determination step is omitted), the CPU 11 reads out, from a register accommodated in the servo circuit 19 through the servo interface 17, a value indicative of an actual servomotor rotational position (actual servomotor rotational position form the origin) P assumed at the time the rotational drive is completed, which value is detected by the encoder 22 and stored in the register. Further, the CPU reads out the second predetermined servomotor rotational amount "1000" from the non-volatile RAM 14 (step S2). Then, the CPU calculates a value $\epsilon$ for pitch error correction by omitting the figure below the decimal point of a value which is obtained by dividing the actual rotational position P by the second predetermined rotational amount (step S3). For example, the pitch error correction value $\epsilon$ of "3" is determined when the actual rotational position P is "3500". Meanwhile, in the case of using the pitch error correction unit $\epsilon$ other than "1", the pitch error correction unit is read out, at step S2, from the non-volatile memory 14, and a repetition of addition of the pitch error correction unit is calculated by omitting the figure below the decimal point of that value which is obtained by dividing the actual rotational position P by the second predetermined rotational amount. Then, the pitch error correction unit is multiplied by the repetition of addition, to thereby calculate the pitch error correction value $\epsilon$.

At step S4, the CPU 11 adds the integration value $\epsilon$ to the actual rotational position P to thereby eliminate the pitch error, and causes the current value register of the RAM 13 to store the result P + $\epsilon$ (in the example, "3503") of addition, whereby the absolute position setting process is finished.

After the completion of the absolute position setting process, control of the drive of the table is started. During the table drive control, the value of the current value register is renewed in accordance with a feedback signal supplied from the incremental linear scale 24. As a consequence, the value stored in the current value register always accurately represents the actual moved position of the table.

The present invention is not limited to the foregoing embodiment, and may be modified in various manners.

For example, in the embodiment, the pitch error correction value $\epsilon$ is calculated on the basis of the predetermined motor rotational amount associated with the pitch error correction, or based on this amount and the pitch error correction unit. Alternatively, a desired pitch error correction value $\epsilon$ may be read out from a lookup table, which is stored beforehand in the non-volatile memory 14 and in which pitch error correction values $\epsilon$ are set in a manner respectively corresponding to a plurality of motor rotational position regions, in dependence on the motor rotational position assumed at the time at which is completed the motor rotation through the first predetermined rotational amount for the absolute position setting process executed upon supply of the power. In the case shown in Fig. 3, for instance, a lookup table may be employed in which correction values $\epsilon$ of "0", "1", ---are set in a manner respectively corresponding to the encoder outputs of "0" - "999", "1000" - "1999", ---.

## Claims

1. An absolute type positioning method comprising steps of:

   (a) rotating a servomotor through a predetermined rotational amount which is larger than a servomotor rotational amount corresponding to backlash in a transmission mechanism interposed between the the servomotor and a driven member, when power to a full-closed type servo system is turned on;

   (b) detecting an actual servomotor rotational position assumed at the time said step (a) is completed, by means of an absolute type position detector attached to the servomotor;

   (c) adding a value for pitch error correction to the detected servomotor rotational position, said value varying as a function of the detected servomotor rotational position; and

   (d) automatically setting a result of addition as an absolute position of the driven member assumed at the time the power is turned on.

2. Absolute type positioning method according to claim 1, further including steps of:

   (e) detecting an actual moved amount of the driven member by means of an incremental position detector attached to the driven member; and

   (f) renewing the absolute position of the driven member in accordance with the detected moved amount of the driven member.

# FIG.1

# FIG.2

```
            ┌─────────────┐
            │    START    │
            └─────────────┘
                   │
   ┌───────────────────────────────┐
   │ DELIVER POSITION COMMAND      │── S1
   │ CORRESPONDING  TO PREDETERMINED│
   │ MOTOR ROTATIONAL AMOUNT       │
   └───────────────────────────────┘
                   │
   ┌───────────────────────────────┐
   │ READ ACTUAL MOTOR ROTATIONAL  │── S2
   │ POSITION P                    │
   └───────────────────────────────┘
                   │
   ┌───────────────────────────────┐
   │ CALCULATE PITCH ERROR         │── S3
   │ CORRECTION VALUE     DEPENDING │
   │ ON MOTOR ROTATIONAL POSITION P │
   └───────────────────────────────┘
                   │
   ┌───────────────────────────────┐
   │ SET ADDITION RESULT P+        │── S4
   │ IN CURRENT VALUE REGISTER     │
   └───────────────────────────────┘
                   │
            ┌─────────────┐
            │   E N D     │
            └─────────────┘
```

# FIG.3

| ENCODER OUTPUT | 0 | 1000 | 2000 | 3000 | 4000 |
|---|---|---|---|---|---|
| PITCH ERROR CORRECTION UNIT | | +1 | +1 | +1 | +1 |
| ABSOLUTE POSITION | 0 | 1001 | 2002 | 3003 | 4004 |

# INTERNATIONAL SEARCH REPORT

International Application No PCT/JP90/00720

## I. CLASSIFICATION OF SUBJECT MATTER (if several classification symbols apply, indicate all) ⁶

According to International Patent Classification (IPC) or to both National Classification and IPC

Int. Cl⁵ G05B19/18

## II. FIELDS SEARCHED

### Minimum Documentation Searched ⁷

| Classification System | Classification Symbols |
|---|---|
| IPC | G05B19/18 |

### Documentation Searched other than Minimum Documentation to the Extent that such Documents are Included in the Fields Searched ⁸

| | |
|---|---|
| Jitsuyo Shinan Koho | 1932 – 1990 |
| Kokai Jitsuyo Shinan Koho | 1971 – 1990 |

## III. DOCUMENTS CONSIDERED TO BE RELEVANT ⁹

| Category* | Citation of Document, ¹¹ with indication, where appropriate, of the relevant passages ¹² | Relevant to Claim No. ¹³ |
|---|---|---|
| Y | JP, A, 01-103708 (Toyoda Machine Works, Ltd.), 20 April 1989 (20. 04. 89), (Family: none) | 1 – 2 |
| Y | JP, A, 60-204005 (Matsushita Electric Industrial Co., Ltd.), 15 October 1985 (15. 10. 85), (Family: none) | 1 – 2 |
| Y | JP, A, 62-92002 (Toshiba Electric Appliances Co., Ltd.), 27 April 1987 (27. 04. 87) & US, A, 4743823 | 1 – 2 |
| Y | JP, A, 61-6705 (Niigata Engineering Co., Ltd.), 13 January 1986 (13. 01. 86) | 1 – 2 |
| Y | JP, B2, 56-26281 (Tokyo Shibaura Electric Co., Ltd.), 17 June 1981 (17. 06. 81) & US, A, 4107654 | 1 – 2 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| August 29, 1990 (29. 08. 90) | September 10, 1990 (10. 09. 90) |

| International Searching Authority | Signature of Authorized Officer |
|---|---|
| Japanese Patent Office | |

Form PCT/ISA/210 (second sheet) (January 1985)